# EUROPEAN PATENT APPLICATION

(11) **EP 3 875 402 A1**
(43) Date of publication of application: **08.09.2021**
(21) Application number: 21160079.6
(22) Date of filing: 01.03.2021
(51) Int. Cl.: B65D 90/00, B65D 90/02

(54) **DECKING BEAM**

(30) Priority: 06.03.2020 GB 202003260
(71) Applicant: Loadlok Manufacturing Limited, Hirwaun Rhondda Cynon Taf (GB)
(72) Inventor: STREET, Henry, Hirwaun, Rhondda Cynon Taff (GB); JONES, Richard, Hirwaun, Rhondda Cynon Taf (GB)
(74) Representative: Abel & Imray

(57) **Abstract**

The present invention provides a decking beam 10 for a storage unit, the decking beam 10 comprising a box section with a top wall 4 with a portion of minimum wall thickness T4ₘᵢₙ of 2.60 ± 0.50 mm, a bottom wall 6 with a portion of minimum wall thickness T4ₘᵢₙ of 2.60 ± 0.50 mm, and a first and second side wall 2, 3 extending between the top wall 4 and the bottom wall 6, each side wall 2, 3 comprising a portion of minimum wall thickness T2ₘᵢₙ of 2.00 ± 0.50 mm.

## Description

### Field of the Invention

The present invention concerns an improved decking beam. More particularly, but not exclusively, this invention concerns decking beams for large storage units for transportation such as heavy-duty road transport, and/or other transportation sectors such as sea, air, and rail.

### Background of the Invention

Transport vehicles such as lorries and trailers are used to transport heavy cargo around the world. The cargo may be placed in storage units, for example a lorry, trailer, or freight container that may require transportation via air, rail or sea. The cargo must be sufficiently supported within the unit(s).

Decking beams are known and used to support cargo within storage units for transportation. Decking beams are often used to form one or more supporting layers within the storage unit. The decking beams may be positioned at a height above the base of the unit which provides an additional floor.

Therefore, decking beams are required to withstand heavy loads of cargo whilst being strong, stiff and relatively lightweight. The present invention seeks to provide an improved decking beam

### Summary of the Invention

The present invention provides, according to a first aspect, a decking beam for a storage unit, the decking beam comprising a box section with a top wall with a portion of minimum wall thickness of 2.60 ± 0.50 mm, a bottom wall with a portion of minimum wall thickness of 2.60 ± 0.50 mm, and a first and second side wall extending between the top wall and the bottom wall, each side wall comprising a portion of minimum wall thickness of 2.00 ± 0.50 mm.

Each of the portions of wall thickness may comprise the thinnest portion of wall thickness for the respective walls. The thickness of the walls may vary, with other parts of the walls being thicker than the identified portions of thinnest wall thickness.

Each of the walls of the decking beam may be manufactured such that they are joined to an adjacent wall. The decking beam may have four sides. The thinnest portions of the walls may be thinner than the thinnest portions of prior art arrangements. As such, the cost of manufacturing may be reduced because less material is required. The reduction in the material used provides a lighter decking beam and more sustainable solution to transportation of cargo. The reduction in weight of the decking beam may reduce the amount of fuel required when transporting the cargo and therefore reduce CO₂ emissions. Furthermore, the reduction in weight may allow the storage units and/or vehicles to hold and transport more cargo, meaning fewer trips, and less fuel consumed.

The internal profile of the decking beam according to the invention may be the same as the internal profile of a prior art decking beam. By having the same internal profile, the decking beam according to the invention may still be used with any attachments designed for use with prior art decking beam.

The decking beam may comprise a longitudinal axis, along which the box section extends. Each of the box section walls has a length, the length taken in a plane perpendicular to the longitudinal axis of the decking beam. Some or all of the portions of minimum wall thickness may extend along a middle section of their respective walls. The portions of minimum wall thickness may comprise between 25% to 75% of the length of the wall.

The maximum wall thickness of the top and/or bottom wall may be 4.00 ± 0.50 mm. The maximum wall thickness of the top and/or bottom wall may be within the range of 4.00 - 4.55 ± 0.50 mm.

The maximum wall thickness of the first and/or second side wall may be 3.15 ± 0.50 mm. The maximum thickness of the first and/or second side wall may be within the range of 3.15 - 3.65 ± 0.50 mm.

The decking beam may have a portion of maximum wall thickness that extends along the length of each or all of the decking beam walls, the portion of maximum wall thickness extending along at least 25 % the length of the wall and at most 75% of the length of the wall.

The decking beam in accordance with the first aspect of the invention may comprise 15 - 20% less material than a prior art decking beam. As such, there may be a consequent saving in the manufacturing costs of the decking beam compared to the prior art.

The decking beam may comprise 6082 grade aluminium alloy. The decking beam may comprise other aluminium alloys. The 6082 grade may be used rather than the 6005A Al as used in prior art decking beams. The decking beam may comprise other suitable grades of aluminium alloy.

The decking beam may be rated to withstand a maximum 1,000 kg load. The decking beam may comprise less material than prior art decking beams but be rated to withstand the same loads.

The decking beam may comprise ridges on the external surface of the top wall. The ridges may provide grip when loading, unloading and/or transporting cargo when the decking beam is fitted within a storage unit.

The decking beam may comprise ridges on the external surface of the bottom wall. The ridges may provide grip when loading, unloading and/or transporting cargo when the decking beam is fitted within a storage unit.

The decking beam may comprise ridges on the external surface of the first and/or second side wall. The ridges may provide grip when loading, unloading and/or transporting cargo when the decking beam is fitted within a storage unit.

The decking beam may comprise an end portion, wherein the end portion of the decking beam may be arranged to be mounted on a track. The decking beam may comprise one or more end portions. The decking beam may be mounted to an internal wall of the storage unit. The internal wall of the storage unit may comprise a mountable member such as a track.

The decking beam may comprise an attachment member, one portion of the attachment member may be configured to engage with the end portion of the decking beam, and another portion of the attachment member may be configured to be mounted on a track. The attachment member may be connected to the end of the decking beam. The attachment member may be configured to have a box shape. The attachment member may be configured to engage with the external surface of the end portion of the decking beam. The attachment member may be configured to engage with the internal surface of the end portion of the decking beam. The decking beam may comprise one or more attachment members connected to one or more end portions of the decking beam. The one or more end portions of the decking beam may be mounted to one or more tracks.

In use, the decking beam may be mounted in a storage unit. The size of the storage unit(s) may differ from one storage unit to another, therefore it is important that the length of the decking beam can fit within the internal walls of the storage unit securely. One or more decking beam may be used if required on a particularly large storage unit. In this particular example, the end portion of one decking beam may be connected to the end portion of a second decking beam.

In a second aspect of the invention, there is provided a decking beam system for storage units comprising one or more decking beam(s), the decking beam comprising a box cross section with a top wall with a portion of minimum wall thickness of 2.60 ± 0.50 mm, a bottom wall with a portion of minimum wall thickness of 2.60 ± 0.50 mm, and a first and second side wall extending between the top wall and the bottom wall, each side wall comprising a portion of minimum wall thickness of 2.00 ± 0.50 mm. The decking beam system comprising one or more tracks, the tracks suitable for mounting within an internal wall of the storage unit. The decking beam system may be arranged such that the decking beam may be mountable on one or more track.

The decking beam system may comprise an attachment member, one portion of the attachment member may be configured to engage with the box cross section of the decking beam, and another portion of the attachment member may be configured to be mounted on a track.

In a third aspect of the invention, there is provided a storage unit suitable for transporting cargo, the storage unit comprising a decking beam system. The decking beam system may comprise a decking beam according to the first aspect of the invention. The storage unit may be a transport vehicle. Alternatively or additionally, the storage unit may be for use on sea, air, or rail transportation.

It will of course be appreciated that features described in relation to one aspect of the present invention may be incorporated into other aspects of the present invention. For example, the method of the invention may incorporate any of the features described with reference to the apparatus of the invention and *vice versa.*

### Description of the Drawings

Embodiments of the present invention will now be described by way of example only with reference to the accompanying schematic drawings of which:
- Figure 1: shows a cross sectional view of a the prior art beam,
- Figure 2: shows a cross sectional view of a beam decking according to a first embodiment of the invention;
- Figure 3: shows a side view of the beam decking; and
- Figure 4: shows a storage unit with the beam decking.

### Detailed Description

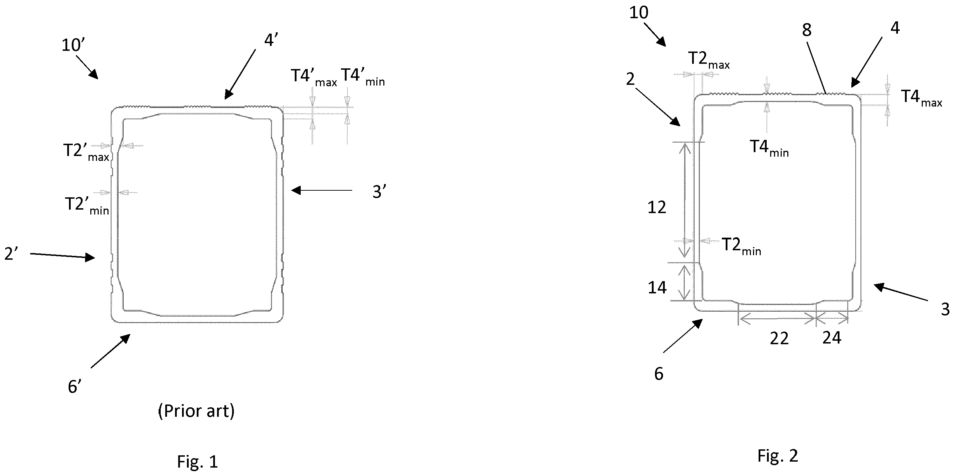

Figure 1 shows a cross section of a prior art decking beam 10' comprising a top wall 4', a bottom wall 6', and two side walls 2', 3' extending between the top and bottom wall. The side walls 2', 3' have a portion of minimum thickness shown by reference T2'ₘᵢₙ. The minimum thickness of the side wall T2'ₘᵢₙ is 2.55 ± 0.50 mm. The maximum thickness of the side wall 2',3' is shown by reference T2'ₘₐₓ. The maximum thickness of the side wall T2'ₘₐₓ is 4.55 ± 0.50 mm.

The top wall 4' has a portion of minimum thickness shown by reference T4'ₘᵢₙ. The minimum thickness T4'ₘᵢₙ of the top wall 4' is 2.55 ± 0.50 mm. The maximum thickness of the top wall 4' is shown by reference T4'ₘₐₓ. The maximum thickness T4'ₘₐₓ of the top wall 4' is 4.55 ± 0.50 mm. In this example, the top wall 4' and the bottom wall 6' have the same dimensions.

Figure 2 shows a cross section of decking beam according to a first embodiment of the invention, the decking beam 10 comprising a top wall 4, bottom wall 6, and two side walls 2, 3 extending between the top and bottom wall.

The side wall 2 has a minimum thickness shown by reference T2ₘᵢₙ. The foregoing description will refer to the side wall(s) 2, 3, as having the same dimensions. In an alternative embodiment, the side walls 2, 3 may have dissimilar dimensions. The minimum thickness of the side wall T2ₘᵢₙ is 2.00 ± 0.50 mm. In alternative embodiments, the minimum thickness of the side wall T2ₘᵢₙ can fall within the range of 2.00 - 2.55 ± 0.50 mm.

The maximum thickness of the side wall 2 is shown by reference T2ₘₐₓ. The maximum thickness of the side wall T2ₘₐₓ is 3.15 ± 0.50 mm. In alternative embodiments, the maximum thickness of the side wall T2ₘₐₓ can fall within the range of 3.15 - 3.65 ± 0.50 mm.

The portions of minimum wall thickness 12 of the side walls 2, 3 extend along at least 50% of the cross sectional length of the respective walls. Figure 2 shows the portion of minimum thickness 12 located at the centre of the side wall 2, equidistant from the top wall 8 and bottom wall 6. In alternative embodiments, the portion of minimum wall thickness 12 of the side wall 2 can be positioned in an off-centre position. The position of the portion of minimum wall thickness portion 12 of each side wall 2, 3 is the same. In an alternative embodiment, the position of the portion of minimum wall thickness 12 of each side wall 2, 3 can be differently located.

The portions of maximum wall thickness 14 of the side walls 2, 3 extend along at least 25% of the cross sectional length of the respective walls. Figure 2 shows the portion of maximum thickness 14 located at an off-centre position of the side wall 2. In alternative embodiments, the portion of maximum wall thickness 14 of the side wall 2 can be positioned at a central position of the side wall 2, equidistant from the top wall 8 and bottom wall 6. The position of the portion of maximum wall thickness portion 14 of each side wall 2, 3 is the same. In an alternative embodiment, the position of the portion of maximum wall thickness 14 of each side wall 2, 3 can be differently located.

The top wall 4 has a portion of minimum thickness shown by reference T4ₘᵢₙ. The foregoing description will refer to the top wall 4 and bottom wall 6, as having the same dimensions. In an alternative embodiment, top wall 4 and/or bottom wall 6 may have dissimilar dimensions. The minimum thickness of the top wall T4ₘᵢₙ is 2.60 ± 0.50 mm. In alternative embodiments, the minimum thickness of the top wall T4ₘᵢₙ can fall within the range of 2.60 - 2.55 ± 0.50 mm.

The maximum thickness of the top wall 4 is shown by reference T4ₘₐₓ. The maximum thickness T4ₘₐₓ of the top wall 4 is 4.00 ± 0.50 mm. In alternative embodiments, the maximum thickness T4ₘₐₓ of the top wall 4 can fall within the range of 4.00 - 4.55 ± 0.50 mm.

The portions of minimum wall thickness 22 of the top wall 4 and/or bottom wall 6 extend along at least 50% of the cross sectional length of the respective walls. Figure 2 shows the portion of minimum thickness 22 located at the centre of the bottom wall 6, equidistant from the side walls 2, 3. In alternative embodiments, the portion of minimum wall thickness 22 of the side wall 2 can be positioned in an off-centre position. The position of the portion of minimum wall thickness portion 22 of each top wall 4 and bottom wall 6 is the same. In an alternative embodiment, the position of the portion of minimum wall thickness 22 of each top wall 4 and bottom wall 6 can be differently located.

The portions of maximum wall thickness 24 of the bottom wall 6 extends along at least 25% of the cross sectional length of the wall. Figure 2 shows the portion of maximum thickness 24 located at an off-centre position of the bottom wall 6. In alternative embodiments, the portion of maximum wall thickness 24 of the bottom wall 6 can be positioned at a central position of the bottom wall 6, equidistant from the each side walls 2, 3. The position of the portion of maximum wall thickness 24 of each top wall 4 and bottom wall 6 is the same. In an alternative embodiment, the position of the portion of maximum wall thickness 24 of each top wall 4 and/or bottom wall 6 can be differently located.

In this present embodiment, wherein the minimum thickness portion 12, 22 is positioned at the centre of the cross sectional length of the wall 2, 4, 6, the weight applied to the decking beam is evenly distributed. This embodiment provides a strong decking beam whilst retaining the advantages of using less material to manufacture the beam.

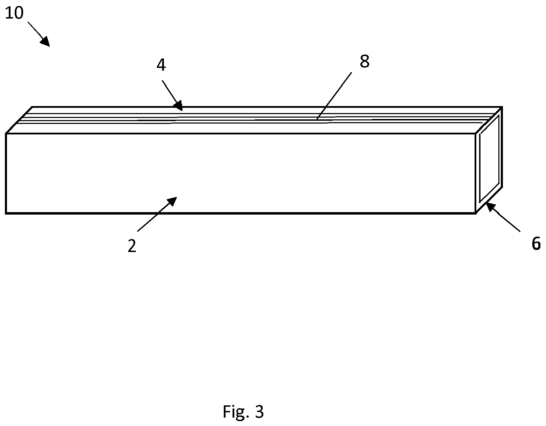

Figure 3 shows a side view of the decking beam 10. Figure 2 and Figure 3 shows the top wall 4 comprising ridges 8. In other embodiments, the ridges 8 may be on one or both the side walls 2, 3. The ridges 8 can be on the bottom wall 6. The ridges 8 can be on one or all of the aforementioned walls.

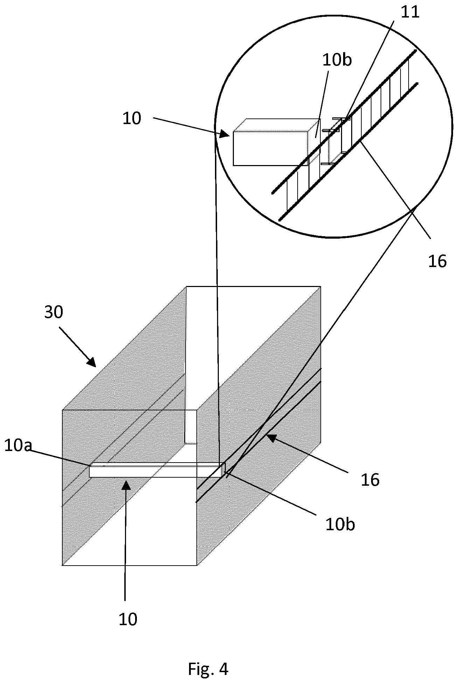

Figure 4 shows a second embodiment of the invention comprising a decking beam 10 mounted in a storage unit 30. In this embodiment the storage unit 30 is stationary, but can be placed on a transport vehicle. The decking beam 10 is mounted on a track or rail 16. The track or rail 16 is mounted on the internal wall of the storage unit 30.

In use, the decking beam 10 is arranged within the storage unit 30, wherein an end portion 10a of the decking beam 10 engages with one internal wall of the storage unit 30, and the opposite end portion 10b of the decking beam 10 engages with an opposite internal wall of the storage unit 30. At the end portion 10a, 10b, of the decking beam 10, there is an attachment member 11. The attachment member 11 engages with the end portion 10a, 10b of the decking beam 10. The attachment member 11 is mounted on the track 16 in order for the decking beam 10 to be positioned at a height above the base of the storage unit 30. More than one decking beam 10 can be arranged adjacent to each other within the storage unit. The cargo can be positioned in contact with the top wall 4 of the beam decking 10.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the invention that are described as preferable, advantageous, convenient or the like are optional and do not limit the scope of the independent claims. Moreover, it is to be understood that such optional integers or features, whilst of possible benefit in some embodiments of the invention, may not be desirable, and may therefore be absent, in other embodiments.

## Claims

1. A decking beam for a storage unit, the decking beam comprising a box section with a top wall with a portion of minimum wall thickness of 2.60 ± 0.50 mm, a bottom wall with a portion of minimum wall thickness of 2.60 ± 0.50 mm, and a first and second side wall extending between the top wall and the bottom wall, each side wall comprising a portion of minimum wall thickness of 2.00 ± 0.50 mm.

2. A decking beam according to clam 1, comprising a longitudinal axis, along which the box section extends, each of the box section walls having a length, the length taken in a plane perpendicular to the longitudinal axis of the decking beam, and wherein some or all of the portions of minimum wall thickness may extend along a middle section of their respective walls.

3. A decking beam according to claim 2, wherein the portion of minimum wall thickness extends along the length of each or all of the decking beam walls, the portion of minimum wall thickness extending along at least 25 % the length of the wall and at most 75% of the length of the wall.

4. A decking beam according to any preceding claim comprising a portion of maximum wall thickness, the portion of maximum wall thickness of the top and/or bottom wall being 4.00 ± 0.50 mm.

5. A decking beam according to any preceding claim comprising a portion of maximum wall thickness, the portion of maximum wall thickness of at least one of the side walls being 3.15 ± 0.50 mm.

6. A decking beam according to claim 4 or claim 5, wherein the portion of maximum wall thickness extends along the length of each or all of the decking beam walls, the portion of maximum wall thickness extending along at least 25 % the length of the wall and at most 75% of the length of the wall.

7. A decking beam according to any preceding claim comprising 6082 aluminium alloy.

8. A decking beam according to any preceding claim comprising ridges on the external surface of the one or more of the decking beam walls to provide grip.

9. A decking beam according to any preceding claim, comprising an end portion, wherein the end portion of the decking beam is arranged to be mounted on a track.

10. A decking beam according to any preceding claim, comprising an attachment member, one portion of the attachment member configured to engage with one end portion of the decking beam, and another portion of the attachment member configured to be mounted on a track.

11. A decking beam system for storage units comprising a decking beam, the decking beam comprising a box section with a top wall with a portion of minimum wall thickness of 2.60 ± 0.50 mm, a bottom wall with a portion of minimum wall thickness of 2.60 ± 0.50 mm, and a first and second side wall extending between the top wall and the bottom wall, each side wall comprising a portion of minimum wall thickness of 2.00 ± 0.50 mm; one or more tracks, the tracks suitable for mounting within an internal wall of the storage unit; and wherein the decking beam is mountable on one or more track.

12. A decking beam system as claimed in claim 11, the decking beam system comprising an attachment member, one portion of the attachment member configured to engage with the box cross section of the decking beam, and another portion of the attachment member configured to be mounted on a track.

13. A storage unit comprising a decking beam system, the decking beam system comprising the decking beam in accordance with any of claims 1 - 10.
